# EUROPEAN PATENT SPECIFICATION

(11) **EP 0 973 673 B1**
(45) Date of publication and mention of the grant of the patent: **19.03.2003**
(21) Application number: 97919333.1
(22) Date of filing: 11.04.1997
(51) Int. Cl.: E01B 29/00, B62D 55/084

(54) **Variable gauge track-laying undercarriage**
Achsabstandveränderliches Unterstützgestell zur Gleiseinsetzung
Substructure de châssis à écartement variable pour pose de voies ferrées

(43) Date of publication of application: 26.01.2000
(73) Proprietor: CATERPILLAR INC., Peoria Illinois 61629-6490 (US)
(72) Inventor: Gallignani, Luigi, 40026 Imola (Bo) (IT)
(74) Representative: Quinterno, Giuseppe
(86) International application number: EP9701805
(87) International publication number: WO98046473

(56) References cited:
- FR-A- 2 084 808
- FR-A- 2 159 116
- FR-A- 2 249 545
- FR-A- 2 416 825

## Description

The invention relates to a variable-gauge undercarriage according to the preamble of claim 1. Such track-laying undercarriages are present on the market.

Document FR-A-2 249 545 discloses an undercarriage with hydraulic variation of the gauge. This known undercarriage, which is devised for application to a tracked hydraulic shovel, has an H-shaped central frame and two lateral sub-frames. The central frame has tubular ends, and the sub-frames have tubular side arms in which the ends of the central frame are telescopically slidable.

This known solution does not provide acceptable values of movement between the minimum and maximum gauge, unless special measures are taken, such as, for example, the removal or reduction of the bulk of the ends of the tubular frame arms which otherwise would project laterally from the track-laying structures if the machine were to be used with a smaller gauge.

The object of the present invention is to eliminate the disadvantages of the known prior art.

According to the invention this object is attained by an undercarriage as claimed.

The invention as characterised by the claims solves the problem of use of a very stable structure with large telescopic movements while being localised solely on the track-laying structures. An integrated structural solution is thus provided in which all the components for varying the gauge of the undercarriage are within the supporting structure and distributed symmetrically so as not to destabilise the machine in use. Moreover, safe, simple, remote guide systems are used, with the introduction of negative-type controls which operate in the case of damage to or breakdown of parts of the plant.

Thanks to the fact that the appendages have outer portions which are longer than their inner portions, they can house respective longer portions of the ends of the central frame while simultaneously avoiding these projecting and interfering with the central body of the frame when the gauge is reduced. The appendages of the slide frames are shaped internally with prismatic guides for providing constant support for the ends of the frame.

Preferably, the central frame of the undercarriage contains hydraulic telescopic cylinders within its ends for adjusting the width of the gauge.

An advantage achieved by the invention lies essentially in the fact that, during the operation needed to vary the gauge, the attitude of the machine is not varied. The manner in which the invention is achieved also allows extremely rapid dismantling of the parts. The telescopic cylinders are rapidly releasable and removable, as are also the lateral structures, without any need to act on the structural parts, which is particularly advantageous during transport or maintenance.

Other significant operative advantages lie in the fact that each control operation relating to the variation in the gauge and activation of safety devices can be carried out directly by the operator in the cab by means of safe and efficient controls, without any need for manual operations and hence without the need for any operations from the ground. In particular this allows constant adjustment of the geometry of the structural parts even when the machine is moving.

Further advantages and characteristics of the invention will become clearer from the detailed description which follows, given with reference to the appended drawings, which show one embodiment purely by way of non-limitative example, and in which:
Figure 1 is a schematic plan view from above of an undercarriage according to the invention;
Figure 2 is a front elevational view of the undercarriage;
Figure 3 is a section of the undercarriage taken on the line III-III of Figure 1;
Figure 4 is a section of the undercarriage taken on the line IV-IV of Figure 1;
Figure 5 is a section parallel to that of Figure 3 but displaced towards the outer side of the undercarriage.

With reference to the Figures, a variable-gauge undercarriage suitable for a track-laying machine comprises a central H-frame 3 and two lateral sub-frames 2. The central frame 3 and the sub-frames 2 are irreleasably fixed together in correspondence with ends 5a, 5b of the central frame 3 and slide frames 7a, 7b of the sub-frames 2. Within its ends 5a, 5b, the central frame 3 contains fluid-dynamic telescopic cylinders 4 for determining the width of the gauge.

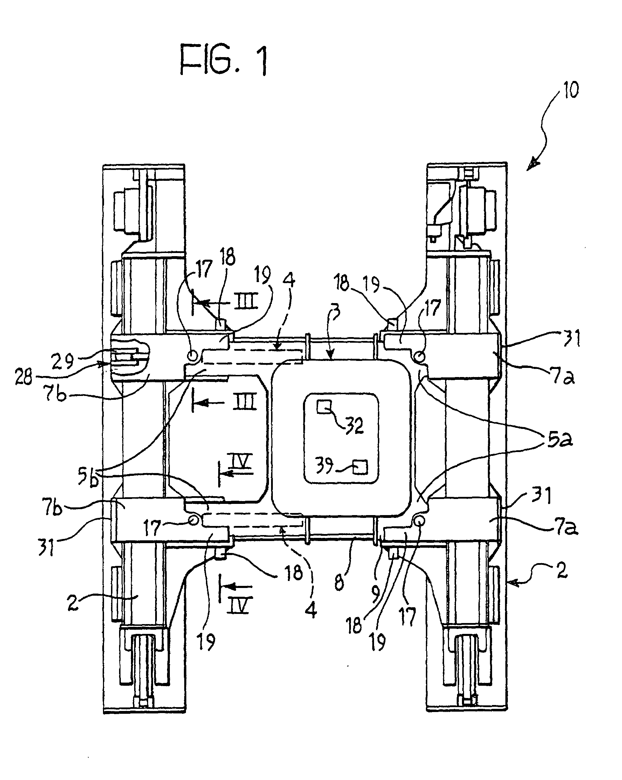

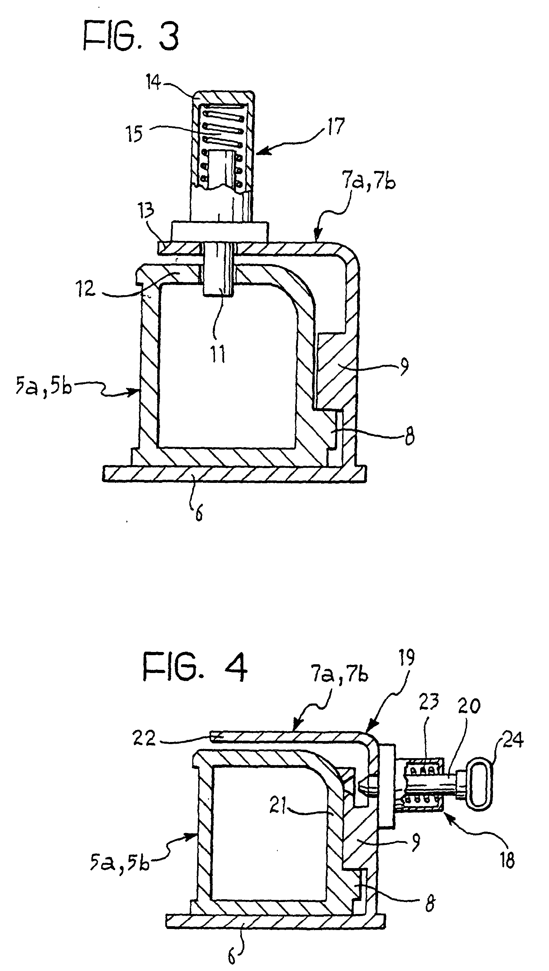

The slide frames 7a, 7b of the sub-frames 2 have hollow coupling appendages 19 which are shaped externally so as to augment the movement between the maximum and minimum gauge widths and are shaped internally with prismatic guides having a bottom face 6 and a lateral face 9 (Figures 3 to 5) for providing constant support for the ends 5a, 5b of the central frame 3. As may be seen in Figure 1, the appendages 19 have outer portions which are longer than their inner portions so that they can house respective longer portions of the ends 5a, 5b of the central frame 3 while simultaneously avoiding these projecting and interfering with the central body of the frame 3 when the gauge is reduced.

In Figures 3, 4 and 5 it can be seen that each prismatic guide is formed with a bottom face 6 of the respective slide frames 7a, 7b, which provides vertical support for the respective end 5a, 5b of the central frame 3, and a lateral face 9 of the slide frames 7a, 7b complementary to a face 8 of the central frame 3 and adapted to provide lateral support for the latter.

It will be understood that the formation of the relatively movable parts in this manner enables them solely to slide in a direction corresponding to the widening or narrowing of the gauge. The particularly large movement achieved, notwithstanding the use of the H-frame 3, is due to the shape of the appendages 19 which enables longer than usual telescopic cylinders 4 to be used.

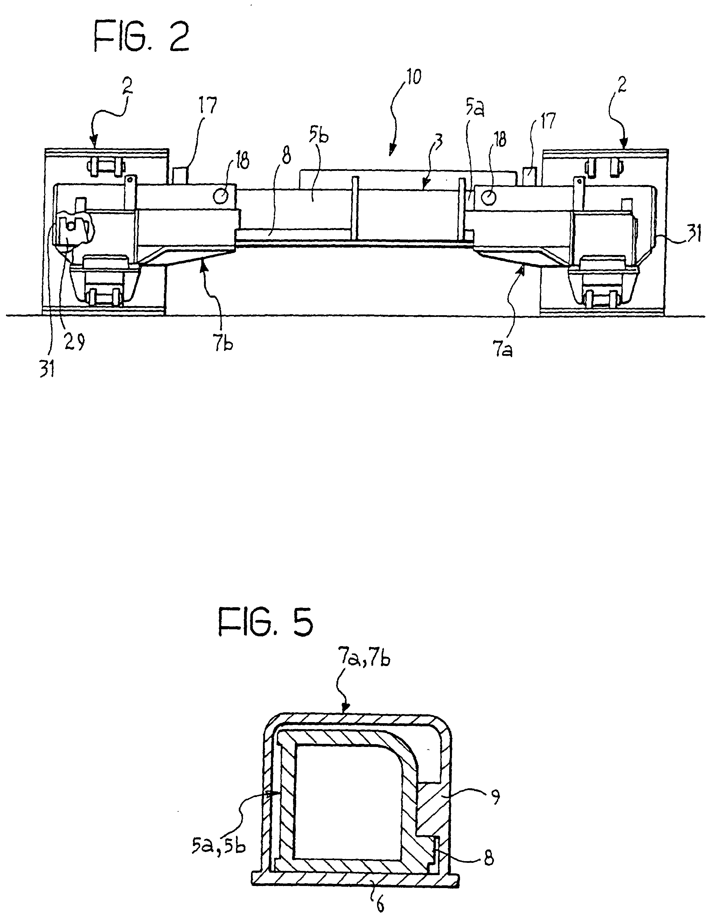

In Figures 1 and 2, the undercarriage 10 is shown with one track 2 completely extended and the other completely retracted; in the left-hand part of both Figures, it can be seen that a rapid release and attachment device 29 for the telescopic cylinders 4 is located within the slide frames 7a, 7b. There is easy access to these through apertures 28 in the walls of the slide frames 7a, 7b facing the side of the sub-frames 2 and normally covered by covers 31.

In this type of machine negative-action, fluid-dynamic valves 32 are generally provided for controlling the operation of the telescopic cylinders 4. For maximum safety, only when a control which pressurises the cylinders 4 is given can these be actuated to vary the gauge. Often, however, a second safety system is provided; at each of the four points at which the central frame 3 is connected to the sub-frames 2, there may in fact be a second type of mechanical locking device 17 or 18 for locking the central frame 3 and the sub-frames 2 against relative movement in a position of use so as to provide further control of the geometric stability in use. This second system is again of the negative type, that is automatically engaged in the absence of a command which may be effected either by a remote control or manually. Figures 3 and 4 illustrate these two solutions, respectively.

In both cases, the mechanical locking device 17, 18 includes a movable geometric-interference element 11, 20 which can move from a first, extended position, in which it interferes geometrically with the surfaces 12, 13, 21, 22 of the central frame 3 and the sub-frames 2, which are relatively movable therebetween, to a second, retracted position in which it does not interfere with these surfaces. A spring 15, 23 for controlling the position of the movable, geometric-interference element 11, 20 biases it towards the extended position in the absence of external inputs and a control 39, 24, able to overcome the force of the spring 15, 23, allows the retraction of the movable, geometric-interference element 11, 20.

In Figure 3, which shows the remote-control locking device 17, the movable, geometric-interference element 11 forms part of a fluid-dynamic cylinder 14 which also contains the spring 15 and, in the absence of pressure, maintains the movable, interference element 11 engaged with the relatively movable surfaces 12, 13, preventing their movement. The relative remote control 39 is shown in Figure 1 on the central frame 3 in a position accessible to the operator.

Again in the case of the manually-controlled locking device 18 of Figure 4, the positioning of the movable interference element 20 effected by the manual control 24 causes the locking or unlocking of the facing surfaces 21, 22. Rather than in the manner shown, the movable geometric-interference element 20 could be threaded and operated by a rotary control rather than a pull control, which shall in any case overcome the resistance of the spring 23.

On account of what has been described, the operations required to vary the gauge are carried out in the following sequence:
- the disengagement of the mechanical locking device 17, 18 is controlled or actuated and consequently this no longer prevents the relative movement of the central frame 3 and the sub-frames 2;
- the remote control for the telescopic cylinders 4 actuates their movement and causes the ends 5a, 5b of the central frame 3 to slide relative to the slide frames 7a, 7b of the sub-frames 2;
- once this movement is completed, the remote control for the telescopic cylinders 4 is deactivated while the automatic operation of the fluid-dynamic valves 32 fixes the gauge in the position reached;
- the second mechanical locking device 17, 18 is then actuated and its movable geometric-interference element 11, 20 returns to engage the surfaces 12, 13, 21, 22, locking them in the predetermined position.

In practice modifications and/or improvements are obviously possible which fall however within the scope of the appended claims.

## Claims

1. A variable-gauge track-laying undercarriage, **characterised by** comprising an H-shaped central frame (3) and two lateral sub-frames (2), the central frame (3) and the sub-frames (2) being irreleasably fixed together in correspondence with ends (5a, 5b) of the central frame (3) and with slide frames (7a, 7b) of the sub-frames (2), wherein the slide frames (7a, 7b) of the sub-frames (2) have hollow coupling appendages (19), wherein the coupling appendages (19) have, relative to the direction of extension of the sub-frames (2), outer portions which are longer than their inner, opposed portions, and said coupling appendages (19) are shaped internally with prismatic guides each of which is formed with a bottom face (6) of the respective slide frame (7a, 7b), which provides a vertical support for the respective end (5a, 5b) of the central frame (3), and wherein a lateral face (9) of the slide frame (7a, 7b) within the respective outer portion of each appendage is complementary to a face (8) of the central frame (3) and adapted to provide lateral support for the latter.

2. An undercarriage according to Claim 1, **characterised in that** the central frame (3) contains hydraulic telescopic cylinders (4) within its ends (5a, 5b) for adjusting the width of the gauge.

3. An undercarriage according to Claim 1 or 2, **characterised in that**, within the slide frames (7a, 7b), it includes a rapid release and attachment device (29) for the telescopic cylinders (4) .

4. An undercarriage according to Claim 1 or 2, **characterised in that** it includes a mechanical locking device (17, 18) for locking the central frame (3) relative to the sub-frames (2) in a position of use so as to provide further control for the geometric stability in use.

5. An undercarriage according to Claim 4, **characterised in that** the mechanical locking device (17, 18) comprises:
- a movable geometric-interference element (11, 20) adapted to move from a first, extended position, in which it interferes geometrically with the relatively movable surfaces (12, 13, 21, 22) of the central frame (3) and of the sub-frames (2), to a second, retracted position in which it does not interfere with these faces;
- a spring (15, 23) for controlling the position of the movable geometric-interference element (11, 20) to maintain it in its extended position; and
- a control (39, 24) for overcoming the thrust of the spring (15, 23) and allowing the retraction of the movable geometric-interference element (11, 20).

6. An undercarriage according to Claim 5, **characterised in that** the control is a remote control (39).

7. An undercarriage according to Claim 5, **characterised in that** the control is a manual control (24).

## Patentansprüche

1. Raupenfahrgestell mit veränderbarer Spurbreite, **dadurch gekennzeichnet, daß** es einen H-förmigen zentralen Rahmen (3) und zwei seitliche Teilrahmen (2) aufweist, wobei der zentrale Rahmen (3) und die Teilrahmen (2) in unlösbarer Weise aneinander befestigt sind in Übereinstimmung mit den Enden (5a, 5b) des zentralen Rahmens (3) und mit Gleitrahmen (7a, 7b) der Teilrahmen (2), wobei die Gleitrahmen (7a, 7b) der Teilrahmen (2) hohle Kopplungsansätze (19) besitzen, wobei die Kopplungsansätze (19) hinsichtlich der Erstreckungsrichtung der Teilrahmen (2) äußere Teile besitzen, die länger sind als ihre entgegengesetzten inneren Teile, und wobei die Kopplungsansätze (19) intern mit prismenförmigen Führungen ausgebildet sind, die jeweils in einer Bodenfläche (9) des jeweiligen Gleitrahmens (7a, 7b) ausgebildet sind, was eine vertikale Unterstützung für das jeweilige Ende (5a, 5b) des zentralen Rahmens (3) vorsieht, und wobei eine Seitenfläche (9) des Gleitrahmens (7a, 7b) innerhalb des jeweiligen äußeren Teils jedes Ansatzes komplementär ist zu einer Fläche (8) des zentralen Rahmens (3) und in der Lage ist, seitliche Unterstützung für letzteren vorzusehen.

2. Fahrgestell gemäß Anspruch 1, **dadurch gekennzeichnet, daß** der zentrale Rahmen (3) Teleskop-Hydraulikzylinder (4) innerhalb seiner Enden (5a, 5b) aufweist zum Einstellen der Spurweite.

3. Fahrgestell gemäß Anspruch 1 oder 2, **dadurch gekennzeichnet, daß** es innerhalb der Gleitrahmen (7a, 7b) eine Schnell-Löse- und Befestigungseinrichtung (29) für die Teleskopzylinder (4) umfaßt.

4. Fahrgestell gemäß Anspruch 1 oder 2, **dadurch gekennzeichnet, daß** es eine mechanische Verriegelungseinrichtung (17, 18) umfaßt zum Verriegeln des zentralen Rahmens (3) bezüglich der Teilrahmen (2) in einer Verwendungsposition, um bei der Verwendung weitere Kontrolle der geometrischen Stabilität vorzusehen.

5. Fahrgestell gemäß Anspruch 4, **dadurch gekennzeichnet, daß** die mechanische Verriegelungseinrichtung (17, 18) Folgendes aufweist:
ein bewegliches Element (11, 20) für geometrische Interferenz bzw. geometrischen Eingriff, das geeignet ist zur Bewegung aus einer ersten, ausgefahrenen Position, in der es mit den relativ beweglichen Oberflächen (12, 13, 21, 22) des zentralen Rahmens (3) und der Teilrahmen (2) geometrisch in Interferenz bzw. Eingriff steht, in eine zweite, zurückgezogene Position, in der es mit diesen Flächen nicht in Interferenz bzw. Eingriff steht;
eine Feder (15, 23) zum Steuern der Position des beweglichen geometrischen Interferenzelements (11, 20), um es in seiner ausgefahrenen Position zu halten; und
eine Steuerung (39, 24) zum Überwinden des Schubs der Feder (15, 23) und um das Zurückziehen des beweglichen geometrischen Interferenzelements (11, 20) zu gestatten.

6. Fahrgestell gemäß Anspruch 5, **dadurch gekennzeichnet, daß** die Steuerung eine Fernsteuerung (39) ist.

7. Fahrgestell gemäß Anspruch 5, **dadurch gekennzeichnet, daß** die Steuerung eine manuelle Steuerung (24) ist.

## Revendications

1. Substructure de châssis à écartement variable pour pose de voie ferrée, **caractérisée par** le fait de comprendre un cadre central (3) en forme de H et deux sous-cadres (2) latéraux, le cadre central (3) et les sous-cadres (2) étant fixés ensemble de façon indésolidarisable en correspondance avec des extrémités (5a, 5b) du cadre central (3) et avec des cadres de coulissement (7a, 7b) des sous-cadres (2), dans laquelle les cadres de coulissement (7a, 7b) des sous-cadres (2) ont des appendices d'accouplement (19) creux, dans laquelle les appendices d'accouplement (19) ont, par rapport à la direction de l'extension des sous-cadres (2), des parties extérieures qui sont plus longues que leurs parties intérieures opposées, et lesdits appendices d'accouplement (19) sont conformés intérieurement avec des guides prismatiques dont chacun est formé avec une face inférieure (6) du cadre de coulissement (7a, 7b) respectif, qui produit un support vertical pour l'extrémité (5a, 5b) respective du cadre central (3), et dans laquelle une face latérale (9) du cadre de coulissement (7a, 7b), à l'intérieur de la partie extérieure respective de chaque appendice, est complémentaire à une face (8) du cadre central (3) et adaptée pour fournir un support latéral pour ce dernier.

2. Substructure selon la revendication 1, **caractérisée en ce que** le cadre central (3) contient des vérins hydrauliques (4) télescopiques à l'intérieur de ses extrémités (5a, 5b), afin d'ajuster la largeur de l'écartement.

3. Substructure selon la revendication 1 ou 2, **caractérisée en ce que**, dans les cadres de coulissement (7a, 7b), elle comprend un dispositif de désolidarisation rapide et de fixation rapide (29) pour les vérins (4) télescopiques.

4. Substructure selon la revendication 1 ou 2, **caractérisée en ce qu'**elle comprend un dispositif de verrouillage mécanique (17, 18) pour verrouiller le cadre central (3) par rapport aux sous-cadres (2) en une position d'utilisation, de manière à fournir une commande supplémentaire pour la stabilité géométrique, en utilisation.

5. Substructure selon la revendication 4, **caractérisée en ce que** le dispositif de verrouillage mécanique (17, 18) comprend :
- un élément à interférence géométrique (11, 20) mobile, adapté pour se déplacer d'une première position, étendue, dans laquelle il interfère géométriquement avec les surfaces (12, 13, 21, 22), mobiles les unes par rapport aux autres, du cadre central (3) et des sous-cadres (2), en une deuxième position, rétractée, dans laquelle il n'interfère pas avec ces faces ;
- un ressort (15, 23) pour commander la position de l'élément à interférence géométrique (11, 20) mobile, afin de le maintenir dans sa position étendue ; et
- une commande (39, 24) pour surmonter la poussée du ressort (15, 23) et permettre la rétraction de l'élément à interférence géométrique (11, 20) mobile.

6. Substructure selon la revendication 5, **caractérisée en ce que** la commande est une télécommande (39).

7. Substructure selon la revendication 5, **caractérisée en ce que** la commande est une commande manuelle (24).
